# EUROPEAN PATENT SPECIFICATION

(11) **EP 2 242 996 B1**
(45) Date of publication and mention of the grant of the patent: **04.09.2013**
(21) Application number: 07824104.9
(22) Date of filing: 11.10.2007
(51) Int. Cl.: G01D 11/24, G01D 11/30, G01L 5/00

(54) **MULTI SENSING EMBEDMENT TRANSDUCER/SENSOR**
EINGEBETTETER MESSWANDLER/SENSOR FÜR MEHRFACHMESSUNG
CAPTEUR/TRANSDUCTEUR INTÉGRÉ À DÉTECTIONS MULTIPLES

(43) Date of publication of application: 27.10.2010
(73) Proprietor: West, Roger, Glos GL7 4EQ (GB)
(72) Inventor: West, Roger, Glos GL7 4EQ (GB)
(74) Representative: Fenlon, Christine Lesley
(86) International application number: PCT/GB2007/003850
(87) International publication number: WO 2009/047467

(56) References cited:
- EP-A- 0 129 331
- WO-A-03/004975
- US-A- 4 813 820

## Description

This invention relates to a multi sensing transducer for measuring the parameters of acceleration, strain, vibration and temperature within the same embedment housing for easy attachment

Patents EPO129331, GB981777.02, GB0223814.5, GB0210712.6 and GB0100984.4 are related to the innovative idea of embedding a plug type metal sensor into a body for the purpose of measuring strain and temperature in a body.

According to the present invention the transducer extends these features to include accelerometers to measure acceleration and vibration in three planes, including the plane of the strain gauge and two other planes such that all three planes are mutually at right angles. The strain gauge itself is also able to measure vibration as well as force/strain.

The transducer is easily mounted on the body (BODY) to be monitored by dint of an accurate interference fit between the transducer's barrel and the receptor hole. This hole is normally drilled and reamed to an accuracy of a few microns.

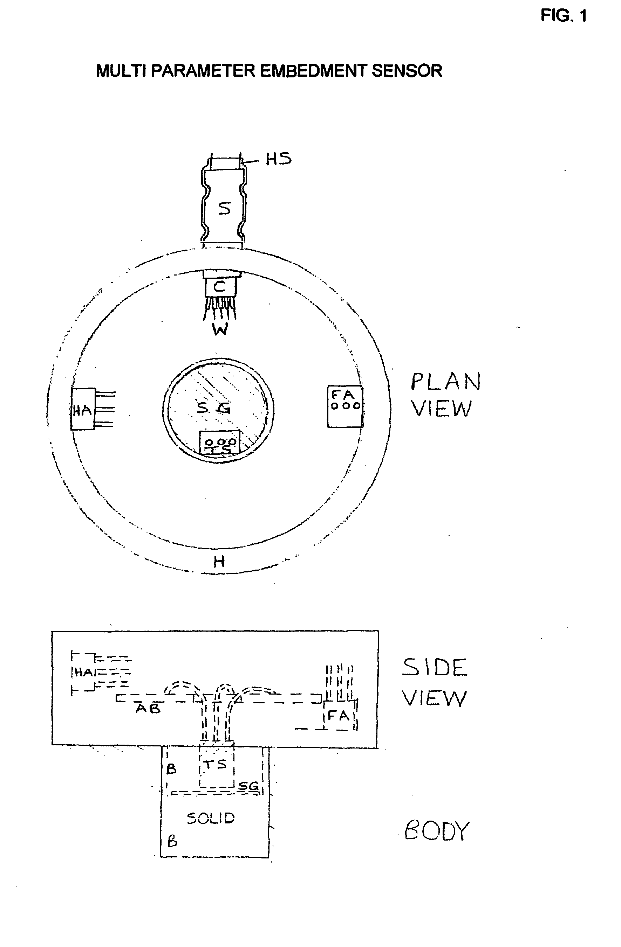

The system comprising the body, the barrel and the components (SG, TS, HA and FA see FIG 1.) housed in the barrel B and housing H, is shown in FiG 1. These component's output can be amplified electronically using the internal amplifier (AB FIG 1.).

The transducer/sensor is retained in the hole and therefore the body is held tightly by dint of the interference fit and depth of the barrel B. However, as the barrel B is also critical in transmitting the force, heat and acceleration parameters, it is therefore advisable in some cases to reinforce the anchorage of the housing H by a bonding agent around the circumference of the housing.

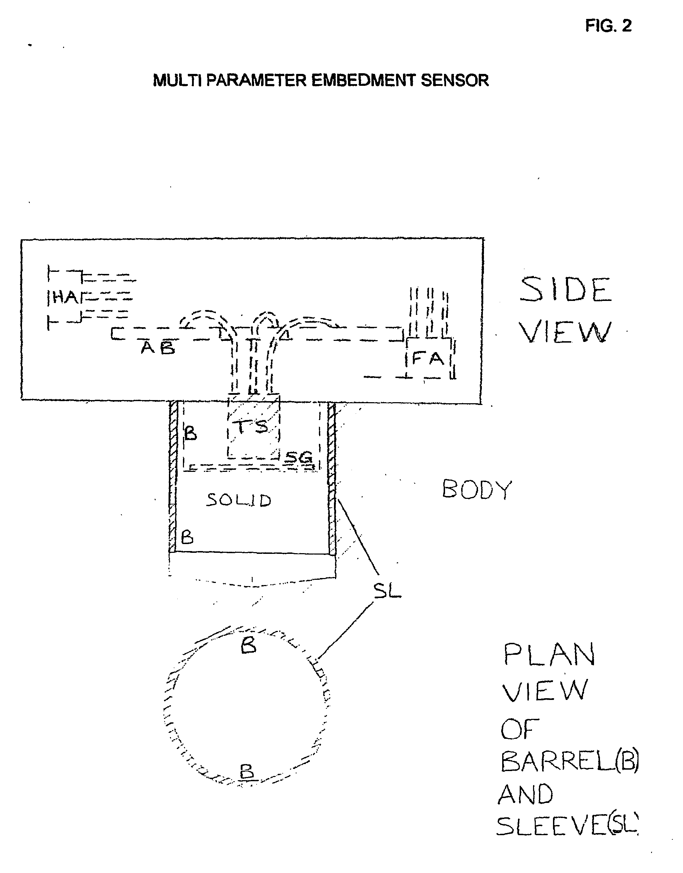

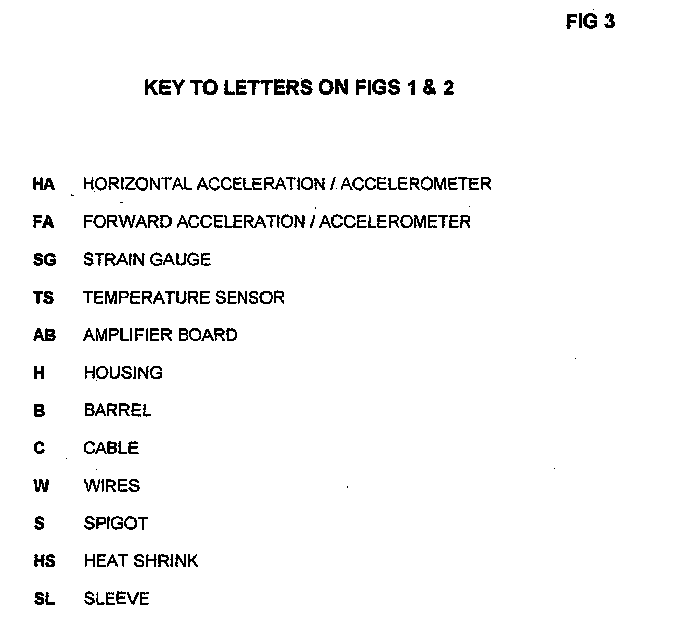

The output of this embedment transducer (plug sensor) will transmit the electrical voltages/currents, derived from the internal components, via a cable C and wires W, see FIG 1, which will run through the side wall of the housing H via a spigot S, see FIG 1. Overall the housing H and cable C should provide a hermetically sealed unit. It is usual to shrink heat shrink sleeving HS, see FIG.1 and FIG.2., to the cable C / spigot S junction.

Alternatively the contact between the Barrel (B) and the BODY (see FIG.1 and FIG.2.) can be made via a sleeve (SL). This sleeve (SL) is likely to be made of some resilient, malleable and thermal conductive material so as to provide a less rigid system.

The system of three mating and slightly interfering parts is able to take a shape more suitable to the transmission of physical displacement from BODY (see FIG.1 and FIG.2.) to Barrel (B). This displacement is caused by the strain/force to be measured.

The system should have the effect of providing a more consistent relationship between strain and displacement and thereby strain gauge output. The system is as shown in FIG.2. The sleeve (SL) will also enhance the thermal contact between the BODY and the Barrel (B) and SL is likely to be made from brass, copper or some similar highly heat conductive material thus also serving to enhance the thermal conductivity and increase the accuracy of the temperature sensing.

The system/sensor/transducer also has an inbuilt amplifier and other electronics to digitise and data reduce the outputs of the sensors. There is also capacity to carry a dry cell voltage power source. The unit can also transmit digitised data via a telemetry system.

In any event the embedment transducer (plug sensor) will measure and can indicate all these parameters and this information can be transmitted to a control site elsewhere or can be downloaded into a computer or directly read

## Claims

1. A multi purpose and multi parameter sensing transducer comprising a plug, for insertion and interference fit into an opening in the surface of a structure to be monitored, the plug comprising a generally cylindrical body (H) having a barrel (B) extending from one end thereof, and the bottom of said barrel (B) having a strain gauge (SG) received thereon for the measurement of coplanar forces, **characterised in that**:
the transducer further comprises other electronic components (HA, FA, AB, TS) fixed within the transducer to measure temperature, vibration and
acceleration, the electronic component for measuring temperature being a temperature sensor (TS) housed within the barrel (B); and
a sleeve (SL) in contact with the outside of the barrel (B) so that contact between the transducer and the structure to be monitored is made via the sleeve (SL), which sleeve is made from a resilient, malleable and heat conductive metal having the effect of enhancing the thermal conductivity.

2. A transducer as claimed in claim 1, wherein the sleeve is made from brass or copper.

3. A transducer as claimed in Claim 1 or 2, further comprising an inbuilt electronic amplifier and other electronics to digitise and data reduce the amplified output of the sensors.

4. A transducer as claimed in Claim 1, 2 or 3, which is configured so as to be able to carry a dry cell voltage power source.

5. A transducer as claimed in any preceding Claim, which is configured to transmit the output of the strain gauge and other electronic components via a telemetry system.

6. A transducer as claimed in any preceding Claim, wherein the electronic components for measuring acceleration comprise accelerometers configured to measure acceleration in three mutually-perpendicular planes, one of which is in the plane of the strain gauge.

7. A transducer as claimed in any preceding Claim, wherein the strain gauge is also configured for use in measuring vibration.

## Patentansprüche

1. Mehrzweck- und Mehrparameter-Messwandler, umfassend einen Stecker, zum Einsetzen und Aufpressen in eine Öffnung in der Oberfläche einer zu überwachenden Struktur, wobei der Stecker einen im Allgemeinen zylindrischen Körper (H) umfasst, bei dem von dem einen Ende eine Trommel (B) ausgeht, und wobei auf dem Boden der Trommel (B) ein Dehnungsmessstreifen (SG) zur Messung planparalleler Kräfte aufgenommen wird, **dadurch gekennzeichnet, dass**:
der Wandler zudem andere Elektronikkomponenten (HA, FA, AB, TS) umfasst, die in dem Wandler zum Messen von Temperatur, Vibration und Beschleunigung befestigt sind, wobei die Elektronikkomponente zum Messen der Temperatur ein Temperatursensor (TS) ist, der sich in der Trommel (B) befindet; und
eine Buchse (SL) in Kontakt mit der Außenseite der Trommel (B) ist, so dass der Kontakt zwischen dem Wandler und der zu überwachenden Struktur über die Buchse (SL) erfolgt, die aus einem nachgiebigen, verformbaren und wärmeleitenden Metall hergestellt ist, das die Wärmeleitfähigkeit steigert.

2. Wandler nach Anspruch 1, wobei die Buchse aus Messing oder Kupfer hergestellt ist.

3. Wandler nach Anspruch 1 oder 2, zudem umfassend einen eingebauten Elektronikverstärker sowie andere Elektronik, womit der verstärkte Ausgang der Sensoren digitalisiert und einer Datenreduktion unterworfen wird.

4. Wandler nach Anspruch 1, 2 oder 3, der so konfiguriert ist, dass er eine Trockenzellspannungsquelle tragen kann.

5. Wandler nach einem vorhergehenden Anspruch, der so konfiguriert ist, dass er den Ausgang des Dehnungsmessstreifens und der anderen Elektronikkomponenten über ein Telemetriesystem überträgt.

6. Wandler nach einem vorhergehenden Anspruch, wobei die Elektronikkomponenten zum Messen der Beschleunigung Akzelerometer umfassen, die so konfiguriert sind, dass sie die Beschleunigung in drei zueinander senkrechten Ebenen messen, von denen sich eine in der Ebene des Dehnungsmessstreifens befindet.

7. Wandler nach einem vorhergehenden Anspruch, wobei der Dehnungsmessstreifen auch zur Verwendung bei der Messung von Vibration konfiguriert ist.

## Revendications

1. Transducteur de détection à buts multiples et à paramètres multiples comprenant une fiche, pour l'insertion et pour un ajustement serré dans une ouverture dans la surface d'un structure à surveiller, la fiche comprenant un corps généralement cylindrique (H) ayant un fût (B) s'étendent d'une extrémité de celui-ci, et le fond dudit fût (B) ayant une jauge de contraintes (SG) reçue sur celui-ci pour la mesure de forces coplanaires, **caractérisé en ce que** :
le transducteur comprend en outre d'autres composants électroniques (HA, FA, AB, TS) fixés dans le transducteur pour mesurer la température, les vibrations et l'accélération, le composant électronique pour mesurer la température étant un capteur de température (TS) logé dans le fût (B) ; et
un manchon (SL) en contact avec l'extérieur du fût (B) de sorte que le contact entre le transducteur et la structure à surveiller est établi via le manchon (SL), ledit manchon étant réalisé en un métal résiliant, malléable et conducteur de chaleur ayant l'effet d'augmenter la conductivité thermique.

2. Transducteur selon la revendication 1, dans lequel le manchon est réalisé en laiton ou en cuivre.

3. Transducteur selon la revendication 1 ou 2, comprenant en outre un amplificateur électronique intégré et d'autres électroniques pour numériser et réduire les données de la sortie amplifiée des capteurs.

4. Transducteur selon la revendication 1, 2 ou 3, qui est configuré pour pouvoir supporter une source de puissance de tension de batterie sèche.

5. Transducteur selon l'une quelconque des revendications précédentes, qui est configuré pour transmettre la sortie de la jauge de contraintes et d'autres composants électroniques via un système de télémétrie.

6. Transducteur selon l'une quelconque des revendications précédentes, dans lequel les composants électroniques pour mesurer l'accélération comprennent des accéléromètres configurés pour mesurer l'accélération dans trois plans mutuellement perpendiculaires, dont un est le plan de la jauge de contraintes.

7. Transducteur selon l'une quelconque des revendications précédentes, dans lequel la jauge de contraintes est également configurée pour être utilisée pour mesurer les vibrations.
